Europäisches Patentamt

European Patent Office

Office européen des brevets

(11) Veröffentlichungsnummer : **0 433 885 B1**

(12) **EUROPÄISCHE PATENTSCHRIFT**

(45) Veröffentlichungstag der Patentschrift :
**28.07.93 Patentblatt 93/30**

(51) Int. Cl.⁵ : **A23C 21/00, A23C 9/142,
C13K 5/00, A23L 1/304**

(21) Anmeldenummer : **90124063.0**

(22) Anmeldetag : **13.12.90**

(54) **Verfahren zur Fraktionierung von Milch oder Milcherzeugnissen.**

Die Akte enthält technische Angaben, die nach dem Eingang der Anmeldung eingereicht wurden und die nicht in dieser Patentschrift enthalten sind.

(30) Priorität : **20.12.89 DE 3942028**

(43) Veröffentlichungstag der Anmeldung :
**26.06.91 Patentblatt 91/26**

(45) Bekanntmachung des Hinweises auf die Patenterteilung :
**28.07.93 Patentblatt 93/30**

(84) Benannte Vertragsstaaten :
**BE DE DK FR GB NL**

(56) Entgegenhaltungen :
**FR-A- 2 245 290
GB-A- 1 009 338
US-A- 2 129 222
US-A- 2 622 982
FOOD SCIENCE & TECHNOLOGY AB-STRACTS; J.McKINNEY, Nr. 78-12-C0498 (78060588), J. McKinney: "Extraction of bound aflatoxius", & Zeszyty Problemowe Postepow Nauk Rolniczych, no. 189, pages 247-254, 1977**

(56) Entgegenhaltungen :
**FOOD SCIENCE & TECHNOLOGY AB-STRACTS; S.TSUJI, Nr. 87-06-T0030: "Rapid determination of mono-, di- and tri-isopropyl citrate in foods by gas chromatography", & Journal of Food Protection, vol. 49, no. 11, p. 914-916, 1986
FOOD SCIENCE & TECHNOLOGY AB-STRACTS; M.TAMARI, Nr. 87-01-P0131: "Isolation and identification of ciliatine (2-aminoethylphosphonic acid) from acid soluble fraction of skim milk powder", & Science Bulletin of the Faculty of Education, Nagasaki University, no. 36, p. 95-104, 1985
Journal of Food Protection, vol. 49, No. 11, p. 914-916 (1986)**

(73) Patentinhaber : **Kali-Chemie Aktiengesellschaft
Postfach 220, Hans-Böckler-Allee 20
W-3000 Hannover 1 (DE)**

(72) Erfinder : **Möller, Hans Günter
Woltersburger Mühlenweg 10 a
W-3110 Uelzen 5 (DE)**

(74) Vertreter : **Lauer, Dieter, Dr.
c/o Kali-Chemie Aktiengesellschaft Postfach 220
W-3000 Hannover 1 (DE)**

EP 0 433 885 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent-übereinkommen).

Jouve, 18, rue Saint-Denis, 75001 PARIS

## Beschreibung

Die Erfindung betrifft ein Verfahren zur Fraktionierung von Milch und Milcherzeugnissen, insbesondere von Permeat der Ultrafiltration von Molke und von Mutterlauge der Lactosekristallisation.

Milch enthält - neben Wasser als Hauptbestandteil Fett, Eiweiß, Lactose, Mineralstoffe und eine stickstoffhaltige, nicht Eiweiß enthaltende Fraktion, die sogenannte "NPN-Fraktion". Die NPN-Fraktion (NPN bedeutet non-proteinaceous nitrogen, also Nichtproteinstickstoff) besteht im wesentlichen aus Aminosäuren, Harnstoff, Kreatinin und Ammoniak.

Ein Teil der angelieferten Milch wird in Molkereien, gegebenenfalls nach einer Reinigung, Entrahmung, Pastëurisation oder Sterilisation zu Trinkmilch verarbeitet. Der übrige Teil der Milch wird unter Abtrennung bestimmter Fraktionen weiterverarbeitet. Einige Verfahren gestatten die selektive Abtrennung einzelner Fraktionen. Andere Verfahren bezwecken die vollständige Auftrennung der Inhaltsstoffe.

Eine moderne Methode zur Fraktionierung von Milch oder Milchprodukten ist die Ultrafiltration. Die Ultrafiltration liefert ein an Proteinen angereichertes Retentat und ein Permeat, das Salze, Lactose, die NPN-Fraktion und Riboflavin angereichert enthält. Die Ultrafiltration kann somit zur Anreicherung der Salze, Lactose, der NPN-Fraktion und Riboflavin aus Milch oder Milcherzeugnissen angewendet werden. Die Permeatlösung kann beispielsweise zu salz- und lactosehaltigen Permeatpulver getrocknet werden. Aus der Permeatlösung kann andererseits durch fraktionierte Kristallisation Lactose gewonnen werden.

Die Entsalzung von entfetteter Milch oder Milcherzeugnissen wie Molke, Permeatlösung der Ultrafiltration ist ebenfalls ein bekanntes Verfahren zur Fraktionierung von Milch oder Milcherzeugnissen. Die Entsalzung kann beispielsweise durch überleiten der vorgenannten wäßrigen Substrate über einen Ionenaustauscher erfolgen. Eine andere Möglichkeit besteht in der elektrodialytischen Behandlung der Substrate. Zweck dieser Entsalzung ist einerseits die Herstellung von diätetischer Milch oder diätetischen Milcherzeugnissen. Weiterhin bietet die Entsalzung bestimmte verfahrenstechnische Vorteile. So ist beispielsweise bekannt, daß Lactose aus entsalzter wäßriger Lösung besser kristallisiert. Ein anderes Beispiel ist die Abtrennung der Molkeproteine aus Molke, die bekanntermaßen durch Säure-Hitze-Fällung aus entsalzter Molke annähernd quantitativ möglich ist. Es ist auch festgestellt worden, daß die Durchflußrate entsalzter Substratlösungen bei der Ultrafiltration höher ist.

Nach S. Tsuyi et al., Jorunal of Food Protection 49, 914-916 (1986) ist ein Verfahren zur Fraktionierung von Milchpulver bekannt, bei dem man das Milchpulver in einer gesättigten NaCl-Lösung mit Ethylacetat in Gegenwart von Schwefelsäure extrahiert.

In US-A-2 129 222 wird ein Verfahren beschrieben, bei dem man Molkenpulver mit einer wäßrigen Alkohol-Lösung extrahiert.

Nach US-A-2 622 982 ist ein Verfahren bekannt, bei dem man Molkenpulver mit einer Mischung aus Aceton und Wasser extrahiert.

Die bekannten Verfahren zur Fraktionierung von Milch oder Milcherzeugnissen werden also in wäßriger Lösung durchgeführt. Milch und Milcherzeugnisse in dieser Form sind aber leicht verderblich und müssen daher umgehend verarbeitet werden. Bei der Durchführung der bekannten Fraktionierungsverfahren ist man daher an der Ort der Erzeugung dieser Milcherzeugnisse, also die Molkerei gebunden. Weiterhin liegt eine saisonale Abhängigkeit vor. Man könnte zwar Milch oder Milcherzeugnisse trocken und zur Fraktionierung nach den bekannten Verfahren wieder in Wasser auflösen. Dies ist jedoch umständlich und mit hohem Wasser-und Energieverbrauch verbunden.

Aufgabe der Erfindung ist es, ein verbessertes Verfahren zur Fraktionierung von Milch oder Milcherzeugnissen anzugeben. Diese Aufgabe wird durch das erfindungsgemäße Verfahren gelöst.

Das erfindungsgemäße Verfahren zur Fraktionierung von Milch oder Milcherzeugnissen ist dadurch gekennzeichnet, daß man von getrockneter Milch oder getrockneten Milcherzeugnissen ausgeht, diese mit einem Extraktionsmittel extrahiert, welches eine oder mehrere Carbonsäuren in einer Menge von etwa 40 bis 100 Gew.-% und Wasser in einer Menge von 0 bis etwa 60 Gew.-% enthält, man den flüssigen Extrakt vom festen Rückstand abtrennt und man den erhaltenen Extrakt und den Rückstand gewünschtenfalls trocknet und/oder weiterverarbeitet.

Unter "trocken" werden im Rahmen der vorliegenden Erfindung Milch oder Milcherzeugnisse mit einem Wassergehalt von 0 bis 15 Gew.-% verstanden. Die Angabe des Wassergehaltes bezieht das als Kristallwasser gebundene Wasser nicht mit ein.

Bevorzugt verwendet man trockene Milch oder Milcherzeugnisse mit einem Wassergehalt von 0 bis 8 Gew.-%.

Im Prinzip können eine oder mehrere beliebige Carbonsäure, substituierte Carbonsäuren deren Gemische oder Gemische solcher Substanzen mit bis zu 60 Gew.-% Wasser als Extraktionsmittel verwendet werden. Voraussetzung ist natürlich, daß das Extraktionsmittel im Temperaturbereich, in welchem das erfindungsgemäße

EP 0 433 885 B1

Verfahren üblicherweise durchgeführt wird, in flüssiger Form vorliegt.

Besonders gut geeignet sind Carbonsäuren. Vorteilhafterweise verwendet man ein oder mehrere aliphatische Carbonsäuren mit 1 bis 10 Kohlenstoffatomen oder deren Gemische mit Wasser. Carbonsäuren mit 2 bis 6 Kohlenstoffatomen, insbesondere Essigsäure und Propionsäure, sind ganz besonders gut geeignet.

Man kann auch eine oder mehrere substituierte Carbonsäuren oder deren Gemische mit bis zu 60 Gew.-% Wasser verwenden. Verwendbar sind beispielsweise aliphatische Carbonsäuren mit 1 bis 10 Kohlenstoffatomen, die mit einem oder mehr Halogenatomen, insbesondere Chlor, mit einer oder mehreren Hydroxygruppen oder Oxogruppen substituiert sind. Sehr gut geeignet ist Glycolsäure. Geeignet sind beispielsweise auch Chloressigsäure, Dichloressigsäure oder deren wäßrige Lösungen oder eine wäßrige Lösung von Trichloressigsäure oder Ketoglutarsäure. Verwendbar sind weiterhin Carbonsäuren, die eine weitere Carbonsäure-Gruppe aufweisen, also Dicarbonsäuren.

Man kann eine oder gewünschtenfalls auch Gemische der vorstehend genannten Verbindungen als Extraktionsmittel verwenden.

Zweckmäßigerweise setzt man im erfindungsgemäßen Verfahren gesundheitlich unbedenkliche Säuren ein.

Weiterhin ist es zweckmäßig, solche Säuren einzusetzen, die im Temperaturbereich, in dem das erfindungsgemäße Verfahren durchgeführt wird, flüssig sind.

Bei bestimmten Substraten kann es zweckmäßig sein, im oberen Bereich des angegebenen Wassergehalts zu arbeiten. Der Wassergehalt beträgt dann beispielsweise zwischen etwa 20 und 60 Gew.-% Wasser. So wurde festgestellt, daß bei der erfindungsgemäßen Abtrennung von Begleitstoffen der Lactose, z.B. aus Permeatpulver der Ultrafiltration oder Mutterlauge der Lactosekristallisation, die Lactose umso reiner anfiel, je höher der Gehalt an Wasser war. Gleichzeitig sank allerdings die Ausbeute. Üblicherweise wird das erfindungsgemäße Verfahren daher bei Wassergehalten im unteren Bereich, beispielsweise zwischen 0 und etwa 30 Gew.-%, durchgeführt.

In einer bevorzugten Ausführungsform geht man von getrockneter Milch oder Milcherzeugnissen aus, deren Wassergehalt nicht mehr als 8 Gew.-% beträgt, und verwendet Extraktionsmittel, die eine oder mehrere Carbonsäuren in einer Menge von etwa 40 bis 100 Gew.-%, vorzugsweise 85 bis 100 Gew.-% und Wasser in einer Menge von 0 bis etwa 60 Gew.-%, vorzugsweise 0 bis etwa 15 Gew.-%, enthalten.

Das Extrahieren der Milch bzw. des Milcherzeugnisses mit dem Extraktionsmittel kann kontinuierlich oder satzweise erfolgen.

Die Temperatur, bei der die Extraktion durchgeführt wird. kann in einem weiten Bereich schwanken, z.B. zwischen 15 und 100 °C. Sie wird aber bevorzugt zwischen etwa 15 und etwa 50 °C durchgeführt. Falls der Fachmann native Eiweißfraktionen gewinnen will, empfiehlt sich natürlich die Durchführung bei Temperaturen unterhalb etwa 50 °C, da anderenfalls die Denaturierung von Proteinen einsetzen kann.

Extrakt und fester Rückstand werden voneinander getrennt, beispielsweise durch Dekantieren, Abnutschen, Filtrieren oder Zentrifugieren, Mikrofiltrieren oder Ultrafiltrieren.

In einer Variante wird das erfindungsgemäße Verfahren als einzige Maßnahme zur Fraktionierung von Milchpulver durchgeführt. Das Substrat, Milchpulver, enthält abgesehen vom reduzierten Gehalt an Wasser - alle Milchinhaltsstoffe. Die Fraktionen werden, gewünschtenfalls nach Trocknen durch Abtrennen des Extraktionsmittels, unmittelbar verwendet.

In einer anderen Variante wird das erfindungsgemäße Verfahren neben anderen, aus dem Stand der Technik bekannten Verfahren zur Milchfraktionierung durchgeführt. Das erfindungsgemäße Verfahren kann z.B. im Anschluß an andere aus dem Stand der Technik bekannte Fraktionierungsverfahren durchgeführt werden, beispielsweise im Anschluß an die Ultrafiltration von Molke, wie später noch beschrieben wird.

Das erfindungsgemäße Verfahren kann natürlich auch vor anderen, aus dem stand der Technik bekannten Fraktionierungsverfahren durchgeführt werden. Beispielsweise kann man zunächst nach dem erfindungsgemäßen Verfahren Milchpulver fraktionieren und Extrakt und/oder den Rückstand weiterfraktionieren, beispielsweise durch Kristallisation aus der flüssigen Phase die Mineralstoffanteile abtrennen oder aus der festen Phase die Lactose durch Ultrafiltration.

Natürlich kann man auch Milch zunächst einer Fraktionierung nach dem Stand der Technik unterwerfen, erhaltene fraktionierte Milcherzeugnisse nach dem erfindungsgemäßen Verfahren behandeln und die hierbei erhaltenen Fraktionen einer weiteren, aus dem Stand der Technik bekannten Fraktionierung unterwerfen. Dies wird später anhand der fraktionierten Kristallisation des Extrakts von erfindungsgemäß fraktioniertem Molkenpulver beispielhaft erläutert.

Generell gilt, daß im abgetrennten flüssigen Extrakt Fett, Mineralstoffe, die NPN-Fraktion und Riboflavin und im festen Rückstand die anderen Milchinhaltsstoffe wie Kasein, Molkenproteine und/oder Lactose angereichert enthalten sind.

Welche Stoffe im Extrakt enthalten sind, hängt natürlich davon ab, ob das erfindungsgemäße Verfahren zur Behandlung von Milchpulver oder von bereits fraktionierten Milchprodukten, beispielsweise Molkenpulver angewendet wird. Sinngemäßes gilt auch für den festen Rückstand.

Nach der Extraktion können der Extrakt und der feste Rückstand getrocknet und/oder weiterverarbeitet werden. In welcher Weise die Aufarbeitung erfolgt, hängt von den Substraten und von dem Verwendungszweck der enthaltenen Milchfraktionen ab.

Prinzipiell können der flüssige Extrakt bzw. feste Rückstand getrocknet werden. das heißt vom Extraktionsmittel befreit. und unmittelbar verwendet werden. Die im flüssigen Extrakt bzw. im festen Rückstand enthaltenen Inhaltsstoffe so unterschiedlicher Substrate wie Milchpulver, Magermilchpulver, Molkenpulver, Permeatpulver der Ultrafiltration, Pulver der Mutterlauge der Lactosekristallisation usw. sind nach dem Trocknen nämlich wertvolle Nahrungs und Futtermittel, Nahrungsmittelzusätze oder anderweitig verwendbar, z.B. für pharmazeutische Zwecke.

Die in Extrakt oder Rückstand enthaltenen Milchfraktionen können aber auch weiter fraktioniert werden.

Besonders geeignet ist das erfindungsgemäße Verfahren zur Fraktionierung von Permeatpulver der Ultrafiltration von Molke und Pulver der Mutterlauge aus der Lactosekristallisation.

Das erfindungsgemäße Verfahren soll nun im Hinblick auf zwei bevorzugte Anwendungsbereiche, nämlich die Fraktionierung von getrocknetem Permeat der Ultrafiltration von Molke, beispielsweise Süß oder Sauermolke, und dem bei der Trocknung der Mutterlauge der Lactosekristallisation entstehenden Pulver weiter erläutert werden.

Ein bevorzugter Anwendungsbereich umfaßt die Fraktionierung von Permeatpulver der Ultrafiltration von Molke, im folgenden kurz "Permeatpulver" genannt. Ein solches Permeatpulver kann auf bekannte Weise erhalten werden, beispielsweise indem man entfettete Milch mit Lab versetzt und Süßmolke abtrennt, oder indem man Milch ansäuert und Sauermolke abtrennt, die Süß bzw. Sauermolke einer Ultrafiltration unterwirft und das Permeat trocknet, z.B. durch Sprühtrocknen. Das Permeatpulver enthält geringe Mengen Fett, Eiweiß, die NPN-Fraktion, Salze und, als hauptsächlichen Bestandteil, Lactose.

Bei der Anwendung des erfindungsgemäßen Fraktionierungsverfahrens auf Permeatpulver erhält man zwei Fraktionen, wobei im Extrakt die Lactose stark abgereichert, die anderen Inhaltsstoffe wie Fett, Eiweiß, NPN-Fraktion und die Salze aber angereichert sind. Der Rückstand der Extraktion besteht aus sehr reiner, farbloser Lactose mit sehr geringen Mengen an anderen Bestandteilen. Die Lactose liegt als frei fließendes Pulver ohne hygroskopische Eigenschaften vor. Sie eignet sich hervorragend für die Verwendung im diätetischen und Lebensmittelbereich und in der Tiermast.

Der Extrakt eignet sich, nach Abtrennen des Extraktionsmittels, hervorragend als Zusatz zu diätetischen Lebensmitteln.

Der extraktionsmittelhaltige Extrakt kann gewünschtenfalls auch noch weiter fraktioniert werden. So kann man den Extrakt einengen. Beim Einengen fallen Mineralstoffe, insbesondere ein großer Teil des im Extrakt enthaltenen Kaliumchlorids aus. Die übrigen Inhaltsstoffe reichern sich im Extrakt entsprechend weiter an.

Auch diese, an Mineralstoffen, insbesondere Kaliumchlorid abgereicherte, hinsichtlich der übrigen Inhaltsstoffe, beispielsweise der NPN-Fraktion, angereicherte Fraktion kann noch weiter fraktioniert werden. Man kann beispielsweise das Extraktionsmittel abtrennen, den getrockneten Extrakt in Wasser aufnehmen und durch Einstellen des pH-Werts auf einen Bereich von 6,6 bis 10,5 Calciumphosphat zur Ausfällung bringen. Im hierdurch erhaltenen Extrakt sind die übrigen Inhaltsstoffe, beispielsweise die NPN-Fraktion, besonders stark angereichert.

Ein weiterer bevorzugter Anwendungsbereich des erfindungsgemäßen Verfahrens umfaßt die Fraktionierung der Mutterlauge der Lactosekristallisation. Zur Gewinnung von Lactose engt man üblicherweise das Permeat der Ultrafiltration von Molke ein, wobei Lactose ausfällt. Auf Grund des verhältnismäßig geringen Anteils an Lactose, je nach Grad der Einengung nicht mehr als 60 oder 70 Gew.-%, ist das nach der Trocknung erhaltene Pulver der Mutterlauge der Lactosekristallisation als Futtermittel kaum geeignet.

Durch die Anwendung des erfindungsgemäßen Verfahrens auf das Pulver der Mutterlauge der Lactosekristallisation erhält man als Extraktionsrückstand eine stark an Lactose angereicherte Fraktion. Nach Abtrennen des Extraktionsmittels erhält man eine farblose Lactose mindestens technischer Reinheit (Reinheitsgrad > 80 %), die hervorragend bei der Tiermast verwendbar ist.

Der Extrakt enthält u.a. die NPN-Fraktion und Salze und kann gewünschtenfalls, wie vorstehend beschrieben, durch Abreicherung des Mineralstoffgehaltes noch weiter fraktioniert und konzentriert werden.

Die nach dem erfindungsgemäßen Verfahren erhältlichen Extraktfraktionen, insbesondere die nach dem erfindungsgemäßen Verfahren erhältlichen, vom Extraktionsmittel im wesentlichen befreiten Milchprodukt-Extraktfraktionen sind als Lebensmittel verwendbar. Besonders vorteilhaft sind die nach dem erfindungsgemäßen Verfahren erhältlichen, vorzugsweise vom Extraktionsmittel befreiten Extraktfraktionen von Permeatpulver der Ultrafiltration von Molke und des bei der Trocknung der Mutterlauge der Lactosekristallisation erhältlichen Pulvers.

Ebenfalls Gegenstand der Erfindung sind nach dem erfindungsgemäßen Verfahren aus der Mutterlange erhältliche hinsichtlich der NPN-Fraktion angereicherte Extraktfraktionen.

Das bei der Trocknung gewonnene Extraktionsmittel kann, gegebenenfalls nach Reinigungsoperationen wie Destillation oder Filtration, in das erfindungsgemäße Verfahren rückgeführt werden. Das erfindungsgemäße Verfahren kann also als geschlossenes System betrieben werden und ist damit umweltfreundlich.

Das erfindungsgemäße Verfahren besitzt überraschende Vorteile. Das Verfahren gestattet die standort- und saisonunabhängige Fraktionierung von Milchprodukten. Das erfindungsgemäße Verfahren ist gleichzeitig besonders wasser und energiesparend, da, anders als bei bekannten Fraktionierungsverfahren, eine wäßrige Lösung nicht hergestellt wird.

Das erfindungsgemäße Verfahren besitzt weiterhin überraschende verfahrenstechnische Vorteile bei der weiteren Fraktionierung der erhaltenen Fraktionen. So gestalten sich Membranverfahren, insbesondere die Ultrafiltration, wesentlich optimaler.

Die nach dem erfindungsgemäßen Verfahren erhaltene Lactose kristallisiert besonders gut und ist zudem nicht hygroskopisch.

Die Extraktfraktionen mit dem hohen Gehalt an NPN-Fraktion sind wertvolle diätetische Lebensmittel.

Die folgenden Beispiele sollen das erfindungsgemäße Verfahren weiter erläutern.

Beispiel 1:

Extraktion von Permeatpulver der Ultrafiltration von Süßmolke mit wasserfreier Essigsäure

2000 g Permeatpulver mit dem in Tabelle I, Spalte 1 "Permeatpulver" angegebenen Analysendaten (der Proteingehalt wurde durch Multiplikation des bei der Proteinstickstoffananlyse erhaltenen Wertes mit 6,38 berechnet) wurden mit 6 l wasserfreier Essigsäure (Eisessig) versetzt und bei 70 °C 0,5 h gerührt. Die flüssige Phase wurde anschließend durch Absaugen von der festen Phase abgetrennt.

Die feste Phase, also der Extraktionsrückstand, bestand nach dem Entfernen von Extraktionsmittelrückständen aus Lactose mit einem Reinheitsgrad von 98,61 %. Die Analysendaten sind in Tabelle I, Spalte 2 "Extraktionsrückstand" tabelliert.

Der flüssigen Phase wurde eine Probe entnommen und nach Trennen des Extraktionsmittels analysiert. Die Analysendaten sind in Tabelle I, Spalte 3 "Extrakt" zusammengestellt. Zur weiteren Fraktionierung der flüssigen Phase wurde die Extraktlösung auf etwa 40 Gew.-% Trockensubstanz eingeengt. Es fielen 57,5 g eines im wesentlichen aus Lactose, Protein und Mineralstoffen, insbesondere Kaliumchlorid bestehenden Feststoffes aus. Die Analysendaten der hierbei gewonnenen kristallinen Fraktion und der Mutterlauge können der Tabelle I, Spalten 4 und 5 entnommen werden.

Die Mutterlauge wurde vom Lösungsmittel befreit, enthielt als wesentliche Bestandteile Lactose, Protein, Mineralstoffe und die NPN-Fraktion, die in der hohen Konzentration von 5,20 Gew.-% enthalten war.

## Tabelle I

Analysendaten des in Beispiel 1 eingesetzten Permeatpulvers und der hieraus erhaltenen Fraktion in Gew.-%

|  | Permeatpulver | Extraktionsrückstand | Extrakt | Kristallisat | Mutterlauge |
|---|---|---|---|---|---|
| g TS[1] | 2000 | 1800 | 180 | 57.5 | 100 |
| Fett | 0.10 | 0.06 | 0,21 | 0.07 | 0.29 |
| N[2] | 0,70 | 0.25 | 3,50 | 0,65 | 5.20 |
| N x 6.38 | 4.47 | 1,6 | 22,33 | 4.15 | 33.18 |
| NPN[3] | 0,56 | 0,13 | 3,37 | 0,60 | 5,04 |
| Lactose | 84,81 | 98.61 | 23,59 | 17,28 | 27,37 |
| Lactat | 0.75 | 0.02 | 0,69 | 0,02 | 1,10 |
| Citrat | 2.22 | 1,32 | 0,47 | 0,26 | 0,60 |
| Acetat | 0,00 | 0.30 | 2,45 | 0,36 | 3,71 |
| Asche | 7,78 | 1.88 | 55.12 | 78,60 | 41,03 |
| Na | 0,84 | 0.11 | 6,23 | 7,94 | 5,20 |
| K | 2.51 | 0.24 | 21.27 | 30.91 | 15,48 |
| Ca | 0.31 | 0.35 | 0,09 | 0,11 | 0,08 |
| Mg | 0,10 | 0.11 | 0,01 | 0.01 | 0,01 |
| Cl | 2,02 | 0.27 | 17,93 | 39,87 | 4,77 |
| PO₄ | 1,63 | 0.61 | 6,04 | 0,22 | 9,53 |
| SO₄ | 0,00 | 0.00 | 1,35 | 0.00 | 2,15 |

[1] TS = Trockensubstanz

[2] N = Gesamtstickstoff nach Kjeldahl

[3] NPN = Nichtproteinstickstoff

Wie Tabelle I zeigt, fällt bei der Extraktion von Permeatpulver eine hochreine Lactose an. Diese Lactose (Lactosemonohydrat) fällt farblos an und besitzt ein Kornspektrum, das zu 93,5 % unter 0,2 mm liegt. Diese Lactose kann (nach Abtrennen etwaig vorhandener Extraktionsmittelreste) unmittelbar als Futtermittel oder in der Pharmazie, z.B. als Tablettierhilfsstoff, verwendet werden.

Der Extrakt ist an Fett, Protein, Nichtproteinstickstoff und Mineralstoffen stark angereichert, während der Gehalt an Lactose vergleichsweise gering ist. Die in Beispiel 1 durchgeführte weitere Fraktionierung führt zu einem Kristallisat, das im wesentlichen aus Kaliumchlorid besteht, während die Mutterlauge sich durch eine besonders hohe Anreicherung der NPN-Fraktion auszeichnet. Alle diese Fraktionen sind wertvolle diätetische Lebensmittel.

Beispiel 2:

Extraktion von Permeatpulver der Ultrafiltration von Süßmolke mit wasserfreier Propionsäure.

Das in diesem Beispiel verwendete Permeatpulver entsprach in seiner Zusammensetzung dem in Beispiel 1 verwendeten Produkt (Analysendaten siehe Tabelle II).

Als Extraktionsmittel wurde in diesem Beispiel Propionsäure verwendet. Etwa 150 g des Permeatpulvers wurden viermal mit jeweils 250 ml Propionsäure extrahiert, so daß insgesamt 1 l der Säure eingesetzt wurden. Das Extraktionsmittel wurde jeweils über eine Nutsche abgetrennt. Die Analysendaten von Extrakt und Extraktionsrückstand sind in Tabelle II zusammengefaßt.

Tabelle II

Analysendaten des in Beispiel 2 eingesetzten Permeatpulvers und der hieraus erhaltenen Fraktionen in Gew.-%

|  | Permeat- pulver | Extraktions- rückstand | Extrakt |
|---|---|---|---|
| g TS[1] | 150 | | |
| Fett | 0.10 | 0.01 | 0.83 |
| N[2] | 0.70 | 0.30 | 3,79 |
| N x 6.38 | 4.47 | 1.91 | 25,3 |
| NPN[3] | 0,56 | 0,16 | 3,71 |
| Lactose | 84,81 | 91,56 | 38,30 |
| Lactat | 0,75 | 0,04 | 6,27 |
| Citrat | 2.22 | 1.57 | 7.40 |
| Asche | 7,78 | 4,79 | 31,41 |
| Na | 0.84 | 0,14 | 6,30 |
| K | 2.51 | 1,75 | 8,52 |
| Ca | 0.31 | 0,32 | 0,21 |
| Mg | 0.10 | 0,11 | 0,04 |
| Cl | 2.02 | 1,60 | 5,37 |
| PO4 | 1,63 | 0,89 | 7,47 |

[1] TS = Trockensubstanz

[2] N = Gesamtstickstoff nach Kjeldahl

[3] NPN = Nichtproteinstickstoff

Auch hier besteht der Extraktionsrückstand aus technisch reiner Lactose, während sich der als diätetisches Lebensmittel verwendbare Extrakt durch eine hohe Anreicherung der Nichtproteinstickstoff-Fraktion auszeichnet.

Beispiel 3:

Extraktion von Permeatpulver mit Essigsäure mit Wassergehalten von 0, 20 und 50 Gew.-%

3.1. Extraktion mit wasserfreier Essigsäure

150 g Permeatpulver (Analysendaten siehe Tabelle III Spalte "Permeatpulver") wurden viermal mit jeweils 250 ml wasserfreier Essigsäure (Eisessig) extrahiert. Der Extraktionsrückstand wurde nach beendeter Extraktion im Vakuum getrocknet und analysiert (Daten siehe Tabelle III, Spalte 3.1).

3.2. Extraktion mit Essigsäure mit einem Wassergehalt von 20 Gew.-%

Die Durchführung von Beispiel 3.2. entsprach der Durchführung von Beispiel 3.1., allerdings wurde als Extraktionsmittel Essigsäure mit einem Wassergehalt von 20 Gew.-% eingesetzt. Die Analysendaten des Extraktionsrückstandes sind in Tabelle III, Spalte 3.2. tabelliert.

3.3. Extraktion mit Essigsäure mit einem Wassergehalt von 50 Gew.-%

Die Durchführung von Beispiel 3.3. entsprach der Durchführung von Beispiel 3.1., allerdings wurde Essigsäure mit einem Wasserhalt von 50 Gew.-% eingesetzt. Die Analysendaten des Extraktionsrückstandes sind in Tabelle III, Spalte 3.3. tabelliert.

Tabelle III

Ausbeuten und Analysendaten der Extraktion von Permeatpulver mit wasserfreier Essigsäure sowie mit 20 Gew.-% Wasser bzw. 50 Gew.-% Wasser enthaltender Essigsäure

|  | Extraktions-rückstand[1] 3.1 | Extraktions-rückstand[1] 3.2 | Extraktions-rückstand[1] 3.3 |
|---|---|---|---|
| Fett | 0.06 | 0.09 | 0.03 |
| N[2] | 0.25 | 0.04 | 0.03 |
| N x 6.38 | 1,6 | 0.26 | 0,19 |
| NPN[3] | 0.13 | 0.04 | 0,03 |
| Lactose | 97.98 | 98.3 | 99.25 |
| Lactat | 0.02 | 0.01 | 0,05 |
| Citrat | 1.31 | 0,02 | 0,01 |
| Acetat | 0.3 | 0,03 | 0,04 |
| Asche | 1.87 | 0.4 | 0,12 |
| Na | 0.11 | 0.01 | 0,004 |
| K | 0.24 | 0.01 | 0.008 |
| Ca | 0.35 | 0.09 | 0.005 |
| Mg | 0.11 | 0.001 | 0,001 |
| Cl | 0.27 | 0.04 | 0,04 |
| PO4 | 0,61 | 0,04 | 0,04 |
| Ausbeute[4] | 85 | 60 | 45 |

1) Zahlenangaben in Gew.-%

2) Gesamtstickstoff nach Kjeldahl

3) Nichtproteinstickstoff

4) in %

Aus den Analysendaten ergibt sich, daß die Verwendung von wasserhaltiger Essigsäure zu besonders reiner Lactose führt. Die Ausbeuten sinken allerdings mit zunehmenden Wassergehalt.

Der Extrakt ist bei zunehmenden Wassergehalt an NPN-Fraktion stärker angereichert.

Beispiel 4:

Extraktion von Pulver der Mutterlauge aus der Lactosekristallisation

25 g sprühgetrocknetes Pulver aus der Mutterlauge der Lactosekristallisation von Permeatkonzentration (Analysendaten siehe Tabelle IV) wurden fünfmal mit je 250 ml wasserfreier Essigsäure (Eisessig) extrahiert. Jeweils nach etwa 20 Minuten wurde die flüssige Phase von der festen Phase über eine Kutsche abgetrennt. Der Extraktionsrückstand besaß die in Tabelle IV angegebenen Analysenwerte.

Tabelle IV

Analysendaten des in Beispiel 4 eingesetzten Pulvers der Mutterlauge aus der Lactosekristallisation und des hieraus erhaltenen Extraktionsruckstandes

|  | Mutterlaugen-pulver[1] | Extraktions-rückstand[1] |
|---|---|---|
| Lactose | 53.3 | 91.9 |
| Chlorid | 7.05 | 1,25 |
| Ca | 0.77 | 0,95 |
| $PO_4$ | 2.09 | 0.83 |

[1] Zahlenangaben in Gew. %

Beispiel 4 zeigt, daß auch die Mutterlauge der Lactosekristallisation durch das erfindungsgemäße Verfahren einer sinnvollen Nutzung zugeführt werden kann, nämlich zur Herstellung von technisch reiner Lactose.

## Patentansprüche

1. Verfahren zur Fraktionierung von Milch oder-Milcherzeugnissen, wobei man von getrockneter Milch oder getrockneten Milcherzeugnissen ausgeht, die getrocknete Milch"oder getrockneten Milcherzeugnisse mit einem Extraktionsmittel extrahiert, welches eine oder mehrere Carbonsäuren in einer Menge von etwa 40 bis 100 Gew.-% und Wasser in einer Menge von 0 bis etwa 60 Gew.-% enthält, den flüssigen Extrakt vom festen Rückstand abtrennt und den erhaltenen Extrakt und den Rückstand gewünschtenfalls trocknet und/oder weiter verarbeitet.

2. Verfahren nach Anspruch 1, dadurch gekennzeichnet, daß man getrocknete Milch oder Milcherzeugnisse mit einem Wassergehalt von 0 bis 8 Gew.-% einsetzt.

3. Verfahren nach Anspruch 1, dadurch gekennzeichnet, daß man Extraktionsmittel mit einem Wassergehalt von 0 bis 15 Gew.-% einsetzt.

4. Verfahren nach einem der vorhergehenden Ansprüche, dadurch gekennzeichnet, daß man gegebenenfalls durch Hydroxy-oder Oxogruppen substituierte Carbonsäuren verwendet.

5. Verfahren nach Anspruch 4, dadurch gekennzeichnet, daß man Carbonsäuren mit 2 bis 6 Kohlenstoff-Atomen, insbesondere Essigsäure, Propionsäure, Glycolsäure, verwendet.

6. Verfahren nach einem der vorhergehenden Ansprüche, dadurch gekennzeichnet, daß man die Extraktion bei einer Temperatur zwischen 15 und 100 °C, vorzugsweise zwischen etwa 15 und etwa 50 °C durchführt.

7. Verwendung des Verfahrens nach einem der Ansprüche 1 bis 6 zur Fraktionierung von Süß- und/oder Sauermolkenpulver, getrocknetem Permeat der Ultrafiltration von Milch oder Molke oder der Mutterlauge der Lactosekristallisation.

8. Nach einem Verfahren der Ansprüche 1 bis 7 aus der Mutterlauge erhältliche hinsichtlich der NPN-Fraktion angereicherte Extraktfraktionen.

## Claims

1. Process for the fractionation of milk or milk products, whereby the starting material is dried milk or dried milk products, the dried milk or dried milk products is/are extracted with an extraction agent which contains one or more carboxylic acids in a quantity of approximately 40 to 100% by weight, and water in a quantity of 0 to about 60% by weight, the liquid extract is separated off from the solid residue and the resulting extract and the residue are dried and/or processed further if desired.

2. Process according to Claim 1, characterised in that dried milk or milk products with a water content of 0 to 8% by weight are used.

3. Process according to Claim 1, characterised in that extraction agents with a water content of 0 to 15% by weight are used.

4. Process according to one of the preceding Claims, characterised in that carboxylic acids optionally substituted by hydroxy groups or oxo groups are used.

5. Process according to Claim 4, characterised in that carboxylic acids with 2 to 6 carbon atoms, in particular acetic acid, propionic acid and glycolic acid, are used.

6. Process according to one of the preceding Claims, characterised in that the separation is carried out at a temperature between 15 and 100°C, preferably between about 15 and about 50°C.

7. The use of the process according to one of Claims 1 to 6 for the fractionation of sweet and/or acid whey powder, dried permeate from the ultrafiltration of milk or whey or the mother lye from lactose crystallisation.

8. Extract fractions which are enriched with respect to the NPN fraction obtainable from the mother lye in accordance with a process of Claims 1 to 7.

## Revendications

1. Procédé pour le fractionnement du lait ou de produits laitiers , dans lequel on part de lait en poudre ou de produits laitiers en poudre, on extrait le lait en poudre ou les produits laitiers en poudre à l'aide d'un agent d'extraction qui contient un ou plusieurs acides carboxyliques en une quantité d'environ 40 à 100 % en poids et de l'eau en une quantité de 0 à environ 60 % en poids , on sépare l'extrait liquide du résidu solide et, si on le désire, on sèche et/ou transforme à nouveau l'extrait obtenu et le résidu.

2. Procédé selon la revendication 1, caractérisé en ce que l'on utilise du lait en poudre ou des produits laitiers en poudre ayant une teneur en eau de 0 à 8% en poids.

3. Procédé selon la revendication 1, caractérisé en ce que l'on utilise des agents d'extraction ayant une teneur en eau de 0 à 15 % en poids .

4. Procédé selon l'une des revendications précédentes, caractérisé en ce que l'on utilise des acides carboxyliques éventuellement substitués par des groupes oxo ou hydroxy.

5. Procédé selon la revendication 4, caractérisé en ce que l'on utilise des acides carboxyliques ayant de 2 à 6 atomes de carbone , en particulier les acides acétique , propionique , glycolique .

6. Procédé selon l'une des revendications précédentes , caractérisé en ce que l'on effectue l'extraction à une température comprise entre 15 et 100°C, de préférence entre environ 15 et environ 50°C.

7. Utilisation du procédé selon l'une des revendications 1 à 6 , pour le fractionnement de poudre de lactosérum douce ou acide, de perméat séché de l'ultrafiltration de lait ou de lactosérum .ou de la liqueur mère de la cristallisation du lactose.

8. Fractions d'extrait enrichies en ce qui concerne la fraction NPN ( azote non protidique) , pouvant être obtenues à partir de la liqueur mère selon un procédé des revendications 1 à 7.